# EUROPEAN PATENT APPLICATION

(11) **EP 4 280 691 A1**
(43) Date of publication of application: **22.11.2023**
(21) Application number: 22174255.4
(22) Date of filing: 19.05.2022
(51) Int. Cl.: H04W 36/30, H04W 76/14, H04W 76/15, H04W 84/18

(54) **SWITCHING BETWEEN WIRELESS CONNECTIONS**

(71) Applicant: Koninklijke Philips N.V., 5656 AG Eindhoven (NL)
(72) Inventor: CHAN, Kai Kin, Eindhoven (NL); TANG, Kin Wai, Eindhoven (NL)
(74) Representative: Philips Intellectual Property & Standards

(57) **Abstract**

A system for switching between wireless connections. The system comprises a first unit which communicates with second unit through a first wireless connection and can communicate with the second unit via a second wireless connection. A connection between the first unit and the second unit using the second wireless network is emulated. A signal parameter, indicative of signal quality, is found for the first wireless connection and the second wireless connection and, if the second signal parameter indicates a higher quality of data transfer than the first signal parameter, the wireless connection is switched to the second wireless connection.

## Description

### FIELD OF THE INVENTION

The invention relates to the field of network switching. For example, the invention relates to the field of network switching between networks used to communicate between a parent unit and a baby unit of a baby monitor system.

### BACKGROUND OF THE INVENTION

Conventionally, a device connected to a second device via a wireless network (e.g. via Wi-Fi or Bluetooth) may switch to a different wireless network if the wireless network it is currently connected to has quality below a particular threshold.

A conventional video baby monitor consist of a baby unit which captures a baby's activities and a parent unit that display the captured video. A conventional video baby monitor will use a 2.4GHz ISM band wireless transceiver with a proprietary communication protocol (e.g. Frequency Hopping Spread Spectrum (FHSS)) for transmitting audio-visual data.

The general characteristic of such technology is that the baby unit has high transmitting power, a high receiving sensitivity and a low data rate. The advantages of such an arrangement are that the baby unit can communicate with the parent unit at a relatively long range (e.g. around 300m) in free space and it provides a relatively low cost. However, in this case, a disadvantage is that the baby unit is not able to connect to the Internet which limits the usage scenarios.

Additionally, since the video baby monitor uses 2.4GHz ISM band, it could interfere by other electronics and wireless connections (e.g. Bluetooth, DECT phone, Wi-Fi, etc.) which use similar frequency bands.

Some baby monitors also provide Internet access to the baby monitor, typically by connecting the baby unit and the parent unit to a Wi-Fi router such. This enables the baby unit to connect to the parent unit via Wi-Fi when the other wireless network (e.g. using a 2.4GHz transceiver) has a low signal quality. Thus, network switching may be used in a baby monitor system which allows for direct communication as well as internet access. However, a drawback of this implementation is that the switching between the wireless networks will cause momentary loss of connection and hence a momentary loss of video stream.

Therefore, there is a need to improve the connectivity of devices which may need to switch between wireless networks.

### SUMMARY OF THE INVENTION

The invention is defined by the claims.

According to examples in accordance with an aspect of the invention, there is provided a system for switching between wireless connections, comprising:
a first unit configured to communicate with a second unit through a first wireless connection and capable of communicating with the second unit through a second wireless connection, the first unit comprising a processing system configured to:
determine a first signal parameter indicative of the quality of data transfer between the first unit and the second unit over the first wireless connection;
emulate a connection between the first unit and the second unit through the second wireless connection;
determine a second signal parameter indicative of the quality of data transfer between the first unit and the second unit over the second wireless connection; and
if the second signal parameter indicates a higher quality of data transfer than the first signal parameter, switch the wireless connection the first unit uses to communicate with the second unit from the first wireless connection to the second wireless connection.

Emulating a connection through the second wireless connection whilst the first unit is configured through the first wireless connection enables the first unit to determine the quality of both connections and compare them to determine whether the communications channel between the first and second units should be switched to the second wireless connection.

This is in contrast to other systems where only the availability of a second wireless connection is checked. Only checking the availability of a second wireless connection implicitly assumes that the second channel will always have a better signal quality (i.e. quality of data transfer) which can lead to excessive switching or switching to a wireless connection with lower signal quality.

The processing system may be further configured to switch the wireless communication to the second wireless connection if the first signal parameter indicates a quality of data transfer lower than a first threshold and the second signal parameter indicates a quality of data transfer higher than a second threshold, wherein the first threshold and the second threshold are indicative of a minimum quality of data transfer.

Requiring the signal quality of the first wireless connection to be below a quality threshold means that the wireless connection will not be switched unless the quality of the first wireless connection is below a minimum quality, therefore reducing how often the wireless connection is switched.

Requiring the signal quality of the second wireless connection to be higher than the minimum quality threshold means that, even if the first wireless connection has a low quality (i.e. below the minimum quality), there will be no switching unless the second wireless signal has a signal quality above the minimum quality. This removes the possibility of a connection switch taking place without a noticeable improvement in quality.

The processing system may be further configured to search for an availability of the second wireless connection, and confirm said availability, only if the first signal parameter is below a third threshold, wherein the third threshold is indicative of higher quality of data transfer than the first threshold and, wherein the processing system is configured to emulate the connection between the first unit and the second unit through the second wireless connection after the availability of the second wireless connection is confirmed.

Thus, an availability of the second network is only searched if the signal quality of the first wireless connection is below a quality threshold (e.g. below average quality). The searching threshold (i.e. third threshold) is higher than the switching threshold (i.e. first threshold) such that the searching begins before a switch is necessary and thus an availability of the second wireless connection is confirmed before a switch is needed.

One of the first wireless connection or the second wireless connection may be a direct Wi-Fi connection and the other wireless connection is a Wi-Fi connection via a Wi-Fi access point.

Using direct Wi-Fi and access point (AP) Wi-Fi enables the first unit to only need a Wi-Fi capable transceiver as both wireless connections use Wi-Fi.

The first unit may comprise a transceiver configured to transmit data through the first wireless connection using a first modulation scheme, when using the first wireless connection and transmit data through the second wireless connection using a second, different, modulation scheme, when using the second wireless connection.

In some application, the required data rate may not be very high. For example, in some baby monitoring systems it is only required to stream 480p video from the baby unit to the parent unit. As such, using a DSSS modulation scheme would provide enough bandwidth whilst offering better stability than other modulation schemes, especially in longer range situations. In contrast, the OFDM modulation scheme may offer higher data rates. The higher data rates may be preferable when an access point is used as the access point will add latency to the data stream. Thus, modulation schemes with higher speeds may be preferable when using an access point to connect to a wireless network in order to reduce latency.

The processing system may be configured to emulate the connection between the first unit and the second unit through the second wireless connection by interleaving in time data transfers through the first wireless connection and data transfers through the second wireless connections.

Emulating a wireless connection may comprise establishing the wireless connection.

Interleaving in time data transfers may be referred to as time sharing. When time sharing, the theoretical limit of the bandwidth will be lower over a single wireless connection. However, as long as the bandwidth is higher than the required data rate then it is good enough to offer real-time video. The ratio of data between the wireless connections when time sharing does not have to be 50-50. The ratio could be adjusted according to the data rate required on the wireless connections.

The first signal parameter and the second signal parameter may be based on one or more of signal strength of the corresponding wireless network, packet loss rate of the corresponding wireless network, latency of the corresponding wireless network and jitter of the corresponding wireless network.

The system may further comprise the second unit, wherein the second unit is configured to transmit data through both the first wireless connection and the second wireless connection concurrently. For example, transmitting through both wireless connections by using time sharing.

The second unit may be a monitoring unit for obtaining monitoring data of a second subject and transmitting the monitoring data from the second subject to the first unit.

The first unit may be a receiver unit for receiving the monitoring data related to the second subject and outputting the monitoring data to a first subject such that the first subject can monitor the second subject.

The first unit is for example a parent monitor of a baby monitoring system, e.g. a video baby monitor, and the second unit is then the baby unit of the baby monitoring system. The baby unit sends its data on both connections, and the parent monitor switches between the two wireless connections.

The invention also provides a method for switching between wireless connections when a first unit is configured to communicate with a second unit through a first wireless connection and capable of communicating with the second unit through a second wireless connection, the method comprising:
determining a first signal parameter indicative of the quality of data transfer between the first unit and the second unit over the first wireless connection;
emulating a connection between the first unit and the second unit through the second wireless connection;
determining a second signal parameter indicative of the quality of data transfer between the first unit and the second unit over the second wireless connection; and
if the second signal parameter indicates a higher quality of data transfer than the first signal parameter, switching the wireless connection the first unit uses to communicate with the second unit from the first wireless connection to the second wireless connection.

Switching the wireless communication to the second wireless connection may be based on the first signal parameter being indicative of a quality of data transfer lower than a first threshold.

Additionally, switching the wireless communication may be further based on the second signal parameter being indicative of a quality of data transfer higher than a second threshold, wherein the first threshold and the second threshold are indicative of a minimum quality of data transfer. In general, both the first and second threshold are indicative the same minimum quality such that the new connection does not have a worse quality than the previous connection.

The method may further comprise searching for an availability of the second wireless connection, and confirm said availability, only if the first signal parameter is below a third threshold, wherein the third threshold is indicative of higher quality of data transfer than the first threshold and, wherein emulating the connection between the first unit and the second unit through the second wireless connection is performed after the availability of the second wireless connection is confirmed.

One of the first wireless connection or the second wireless connection may be a direct Wi-Fi connection and the other wireless connection is a Wi-Fi connection via a Wi-Fi access point.

Emulating the connection between the first unit and the second unit through the second wireless connection is achieved by interleaving in time data transfers through the first wireless connection and data transfers through the second wireless connections.

Emulating the connection can be achieved by time sharing.

The invention also provides a computer program product comprising computer program code which, when executed on a computing device having a processing system, cause the processing system to perform all of the steps of the afore-mentioned method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an example of a baby monitoring system;
Figure 2 shows how the two different communication channels may be used in a time sharing manner by the baby unit;
Figure 3 shows a method for switching between networks;
Figure 4 illustrates a first switching logic;
Figure 5 illustrates a second switching logic using a switching threshold;
Figure 6 illustrates a third switching logic using the switching threshold and a searching threshold;
Figure 7 illustrates a fourth switching logic using the switching threshold on the first connection and a switching threshold on the second connection;
Figure 8 illustrates a fifth switching logic using the switching threshold and the searching threshold for the first connection and a switching threshold for the second connection; and
Figure 9 illustrates a sixth switching logic using the switching threshold and the searching threshold for the first connection and the switching threshold and an emulating threshold for the second connection.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system for switching between wireless connections. The system comprises a first unit which communicates with second unit through a first wireless connection and can communicate with the second unit via a second wireless connection. A connection between the first unit and the second unit using the second wireless network is emulated. Signal parameters, indicative of signal quality, are found for the first wireless connection and the second wireless connection and, if the signal parameters indicate a higher quality of data transfer than the first signal parameters, the wireless connection is switched to the second wireless connection. One or more signal parameters may be found for either of the first and second wireless connections.

Switching between wireless networks is particularly advantageous when used in a baby monitoring system.

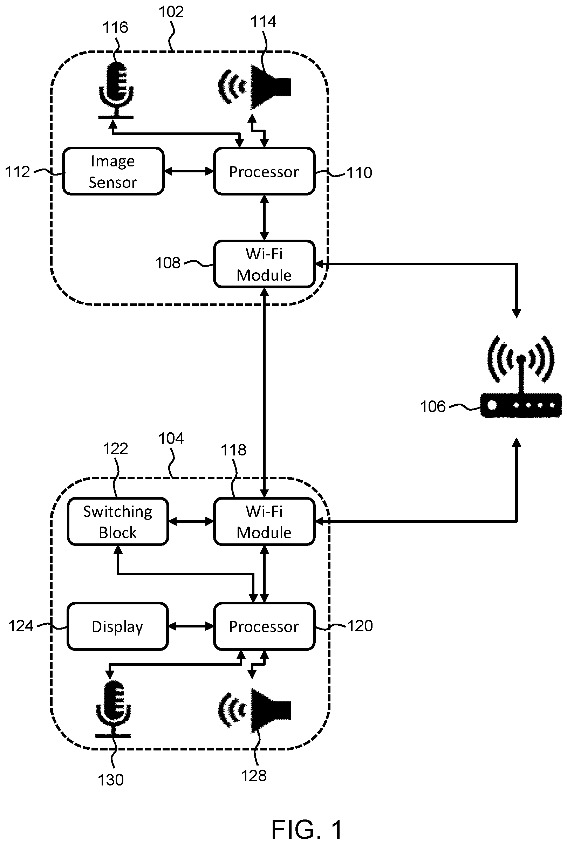

Figure 1 shows an example of a baby monitoring system. The architecture shown may be applied to any video monitoring system, but for convenience it will be described in the context of a baby monitoring system.

There is a baby unit 102 comprising a microphone 116, a speaker 114, an image sensor 112 (e.g. a digital camera), and an image and audio processor 110. The processed image and audio is transmitted by a Wi-Fi module 108.

There is also a parent unit 104 comprising a microphone 130, a speaker 128, a display 124 (e.g. a LCD screen), and an image and audio processor 120. The processed image and audio from the baby unit 102 is received at Wi-Fi Module 118 and displayed via the display 124.

A Wi-Fi access point 106 (e.g. a home router) is also provided. The baby unit's Wi-Fi module 108 can connect to the parent unit's Wi-Fi module 118 via two different wireless networks. One of the wireless networks is a Wi-Fi Direct network where the baby unit's Wi-Fi module 108 connects directly to the parent unit's Wi-Fi module 118 using a software generated access point. The other wireless network is a conventional Wi-Fi network using the home router 106 providing Internet access.

Additionally, the parent unit 104 comprises a switching block 122 which instructs the Wi-Fi module 118 to switch between the wireless networks. In other words, the switching block 122 enables the parent unit 104 to dynamically switch between connections.

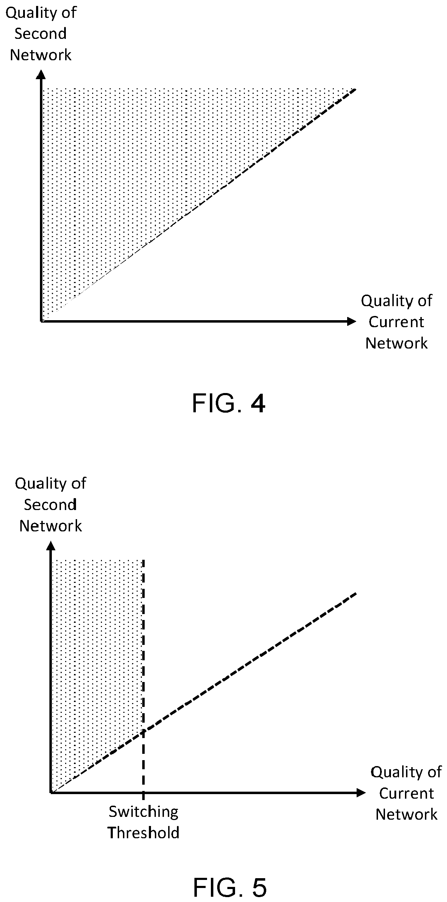

In the baby monitor system shown in Figure 1, the baby unit 102 can connect to the Internet through the home Wi-Fi router 106 or connect to the parent unit 104 through the same RF interface (i.e. Wi-Fi Direct). The parent unit 104 is also setup in such a way that it can connect to the Internet through home Wi-Fi router 106 or can connect to the baby unit 102 through the same RF interface. The switching logic comprised in the switching block 122 which determines when to switch between the wireless networks is further explained below with respect to Figures 4-9.

In general, the switching block 122 dynamically switches between two networks based on signal parameters. The signal parameters of a particular wireless network are indicative of the quality of the connection via the wireless network. The particular switching logic should generally be optimized depending on the application.

In the case of baby monitoring systems, the link budget and range of connection are two important aspects which must be taken into consideration when determining the switching logic.

The Wi-Fi direct network connects the baby unit 102 and the parent unit 104, preferably using a modulation scheme that provides the best link budget whilst covering the longest possible range.

The connection through the home access point (router) 106 leverages the, likely preexisting, Wi-Fi infrastructure that the user may have (e.g. a Wi-Fi extender, Wi-Fi mesh, etc.) and will likely provide a larger area of connectivity. By switching between two wireless networks, the system has the best from both traditionally connected baby monitor and an internet-connected video baby monitor, thus providing the good direct link performance whilst ensuring good indoor coverage.

An advantage of supporting two networks, hence two paths, is that the system can switch to a different network if it provides a better connection than the current network. For example, in indoor environments where two devices are in different rooms, using the home router 106 may provide better connectivity than any other local communication links (e.g. Wi-Fi Direct).

Nowadays, there are technologies such as Wi-Fi extenders and Wi-Fi meshes which enhance the Wi-Fi coverage in a home environment. Thus, the user would likely have Wi-Fi coverage in the spot where their usual activities happen and should be able to cover most of the area that the user is interested.

It should be noted that in Figure 1 the switching block 122 resides in the parent unit 104. However, the switching block 122 could reside in either of the baby unit 102 or the parent unit 104, or both of units 102 and 104 could have a switching block 122. Thus, the initiation of the switch between networks could be triggered by either baby unit 102 or the parent unit 104. It should also be noted that the switching block 122 could be integrated into the Wi-Fi Module 118 or integrated into the processor 120 to minimize the cost and size of implementation.

For the sake of consistency throughout the description, the device which performs the switching between the networks will be referred to as a first device and the device to which it connects to will be referred to as a second device. In the context of Figure 1, this means that the parent unit 104 would be the first device and the baby unit 102 would be the second device.

A major issue of switching between different networks is that it will create a momentary stop in the transmission of data when switching due to the time required to perform network scanning, switching the networks and establishing a connection. In the case of baby monitoring systems, this means a stop in the video feed from the baby unit 102 to the parent unit 104.

In order to avoid such stops in the connectivity, a time-sharing mechanism may be provided in the Wi-Fi module 108 of the baby unit 102. This mechanism enables the baby unit 102 to transmit data via both wireless connections. For example, the baby unit 102 may transmit data via the Wi-Fi router 106 and via Wi-Fi Direct. Thus, the Wi-Fi module 108 of the baby unit 102 simultaneously emulates two network interfaces acting in two different modes.

In this case, the Wi-Fi module 118 of the parent unit 104 could work in both Wi-Fi infrastructure mode (i.e. connected to the Wi-Fi router 106) and in Wi-Fi Direct mode and the parent unit 104 will emulate a single network interface.

In other words, the parent unit 104 will only be connected to a single network whilst the baby unit 102 transmits data over two different networks. The switching block 122 then provides the logic for choosing and selecting the best network to be used for streaming the audio-visual data from the baby unit 102 on the parent unit 104.

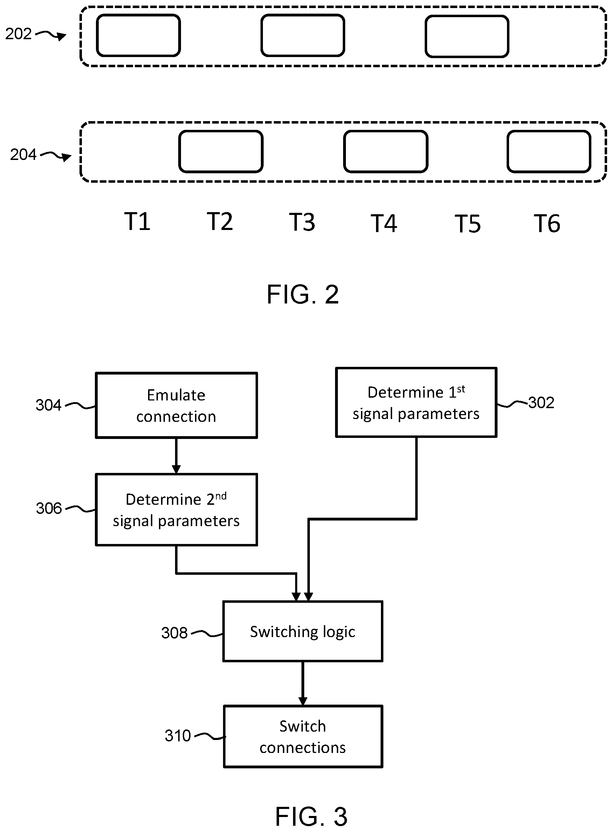

Figure 2 shows how the two different communication channels 202 and 204 may be used in a time sharing manner by the baby unit. The top part of Figure 2 shows when there is direct communication 202 between the baby unit and the parent unit using a Wi-Fi Direct peer to peer connection. At each odd time interval (T1, T3, T5) communication takes place using the communication channel 202. The communication channel 202 may use a direct sequence spread spectrum (DSSS) modulation approach.

This is for example implemented based on the 2.4GHz 802.11b standard.

The baby unit functions as a software enabled access point, for use in a Wi-Fi Direct peer to peer connection.

The bottom part of Figure 2 shows when there is communication 206 between the baby unit and an access point. At each even time interval (T2, T4, T6) communication takes place. The communication channel 204 may use an orthogonal frequency division multiplex (OFDM) modulation approach.

This is for example implemented based on the 2.4GHz 802.11a or 802.1 1g standards.

Figure 2 thus shows that in the baby unit, the communication is shared across the two different communication needs, that is the baby unit and parent unit for local streaming and the baby unit and access point for internet streaming.

The transceiver of the baby unit is in this way configured as two virtual network interfaces at the same time. As a result, the two network interfaces can communicate to the parent unit and to the access point independently.

In Figure 2, during the time for direct communication (i.e. local streaming), the Wi-Fi module of the baby unit may be set to use the DSSS scheme and during the time for Internet streaming (or indirect communication via the access point) the Wi-Fi module may be set to use the OFDM scheme. In this way, the local streaming can make use of the higher link budget of DSSS to allow for longer range. The Internet streaming can make use of the higher bandwidth of OFDM to allow for shorter latency and faster transfer speed.

Thus, in some cases, an important element of the time sharing mechanism is that the Wi-Fi module is configured in two different modulation/demodulation schemes at different times, where the different modulation/demodulation schemes are based on particular needs for a wireless network (e.g. range, signal strength, packet loss etc.).

In contrast, the parent unit only connects to one network establishing only one connection either to the baby unit or to the Wi-Fi router. Again, an important element of the current invention is that the radio is configured in two different modulation/demodulation schemes at different time. The parent unit's Wi-Fi module is set to DSSS scheme during the time while communicating to the baby unit and set to OFDM scheme during the time while communicating to the Wi-Fi router.

Using different modulation and demodulation schemes in the time-sharing mechanism allows for different objectives such as high speed internet access and local long range communication.

This implementation uses a single Wi-Fi chipset on the baby unit and establishes a connection to a home router for Internet access and, at another time instant, establishes a direct connection between the parent unit and baby unit for streaming video. The advantage of such approach is that there is only one radio frequency interface (i.e. the Wi-Fi module) which reduces the cost and complexity of managing the co-existence. However, it will be understood that, in some implementations, a separate chipset/module may be needed for each connection. Additionally, the wireless connections are not limited to Wi-Fi Direct and Wi-Fi via a router. For example, a conventional 2.4 GHz ISM band connection may be used or a Bluetooth connection may be used. More than two potential wireless networks could also be used to provide a larger choice of networks, provided adequate processing resources.

Switching between wireless networks could be used in systems other than a baby monitoring system. Figure 3 shows a method for switching between networks. The method assumes a first device is connected to a first network and is capable of connecting to a second network. Signal parameters are determined for the first network in step 302. The signal parameters are indicative of the quality of the connection using the first network and may include one or more of signal strength, packet loss, latency, bandwidth etc. The choice and weighting of signal parameters may depend on the relative importance of the afore-mentioned parameters and the specific use of the networks.

For example, in some cases, bandwidth and signal strength may be of most importance in order to ensure a high data transfer rate. In other cases, latency and packet loss may be of more importance to ensure consistent data transfer over the network.

When the first device is considering a switch between networks, a connection to the second network is emulated in step 304 and signal parameters are determined for the second network 306. Whether the first device is considering a switch between networks will be further discussed below in relation to Figures 4-9. The first signal parameters, corresponding to the first, current, network, and the second signal parameters, corresponding to the second network, are used as inputs into the switching logic in step 308. The switching logic could, for example, be an algorithm, a set of rules or a comparison table. Based on the switching logic, the first device then determines whether to switch from the first network to the second network in step 310.

Figure 4 illustrates a first switching logic. The first device could compare the quality of the first network (e.g. Wi-Fi Direct), using the signal parameters of the first network, to the quality of the second emulated network (e.g. via a Wi-Fi router) using the signal parameters of the second network. If it is determined that the second network has a better quality than the first network, the first device may switch to the second network. The spotted area illustrated in Figure 4 shows the quality pairs of the first and second networks where the first device would switch to the second network according to this logic.

However, this could mean unnecessary switching between the two connection methods (e.g. when the quality of the first, current, network is adequate). Therefore, in some implementation it may be advantageous to implement a switching threshold above which the first device stays connected to the current network even if the quality of the second network is better.

Figure 5 illustrates a second switching logic using a switching threshold. The switching threshold provides a quality threshold whereby the first device will not switch to the second network if the quality of the current connection is above the switching threshold. When the quality of the current connection is below the switching threshold, the first device will compare the quality of the first connection and the second connection and switch if the quality of the second connection is better than the quality of the first connection. For example, the switching threshold may be a signal intensity of below - 65 dBm.

However, this implementation may introduce a problem that when the user moves around their home with the first device with them, there could be a situation that the switching occurs too late, causing a longer interruption to the data transfer. This could occur if the first device only begins to search for and emulate the second connection when the quality of the first connection is below the switching threshold. Thus, it may be advantageous to begin searching for and emulating the second network before the quality of the first network falls below the switching threshold.

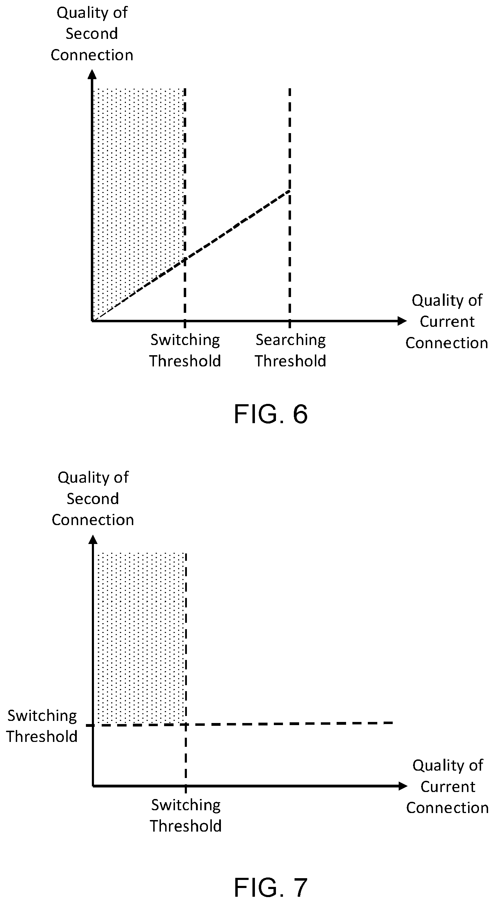

Figure 6 illustrates a third switching logic using the switching threshold and a searching threshold. The first device will search for and emulate the second connection when the quality of the first network falls below the searching threshold, but will not switch to the second network until the quality falls below the switching threshold and is lower than the quality of the second network. The searching threshold is indicative of a higher connection quality than the switching threshold.

Therefore, by having a switching threshold where the switching occurs and a searching threshold indicating when to begin searching for a better connection, the switching can occur faster.

In an example, the searching threshold could set at -50dBm signal intensity and the switching threshold could be set at -65dBm signal intensity. When the first device is connected to a second device via a first connection and the signal intensity of the first connection falls below -50dBm, the first device would start to search for and emulate the second connection. If the signal intensity falls below -65dBm and signal intensity of the second connection is higher than the quality of the first connection, then then the first device would switch to the second connection. Otherwise, the first device will not switch and would continue emulating the second connection.

However, an issue with this approach is that, even if the quality of the second connection is better than the quality of the first connection, the quality of the second connection may also be unacceptable (i.e. switching from a bad connection to a different, slightly better, bad connection).

Figure 7 illustrates a fourth switching logic using the switching threshold on the first connection and a switching threshold on the second connection. The switching threshold on the second connection stops the first device from switching from the first, current, connection to the second connection if the quality of the second connection is below the switching threshold of the second connection. This avoids switching to a second connection with an undesirable quality.

In general, the switching threshold for the first and second connections will indicate a minimum quality of the connection. Preferably, the switching threshold for the second connection indicates a quality at least equal to the quality indicated by the switching threshold for the first connection in order to avoid the first device from switching to a second connection with worse quality.

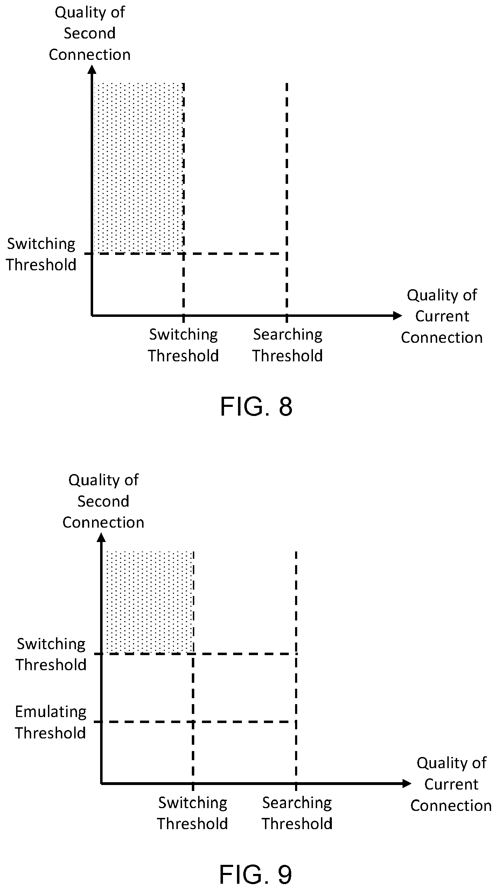

Figure 8 illustrates a fifth switching logic using the switching threshold and the searching threshold for the first connection and a switching threshold for the second connection. The first device will thus begin searching for and emulating the second connection when the quality of the first connection is below the searching threshold. The first device will only switch to the second connection if the quality of the first connection is below the switching threshold of the first connection and if the quality of the second, emulated, connection is above the switching threshold of the second connection.

However, in some cases the first device will be emulating the second connection despite the second connection having a low quality.

Figure 9 illustrates a sixth switching logic using the switching threshold and the searching threshold for the first connection and the switching threshold and an emulating threshold for the second connection. The emulating threshold is lower than the switching threshold of the second connection. If, when the first device emulates the second connection, the quality of the second connection is below the emulating threshold, the first device may stop emulating the second connection. For example, the first device may stop emulating the second connection for a fixed period of time (e.g. 10 seconds to 1 minute) or may stop emulating the second connection until the quality of the first connection falls (e.g. below the switching threshold or a different threshold between the searching threshold and the switching threshold).

Previous examples have mostly focused on the quality of the connections being indicated by signal intensity/strength. However, one or more of the signal strength, packet loss rate, latency, etc. could also be used to indicate the quality of the connection. For example, if the signal parameters use signal intensity and latency to indicate quality of a connection, the two dimensional graphs shown in Figures 4-9 may turn into four dimensional data sets having both the signal intensity and latency for each connection. The afore-mentioned thresholds may be different for each parameter. Alternatively, a combined (e.g. weighted combination) of the parameters may be used.

Returning to the example of a baby monitoring system as shown in Figure 1, when the baby unit 102 and the parent unit 104 are connected via the Wi-Fi router 106 under infrastructure mode, the Wi-Fi router 106 essentially acts like a relay (or man in the middle) by receiving the video stream from the baby unit 102 and then transmitting the video data to the parent unit 104. Because of the relay of the data, there is additional delay causing sub-optimal user experience (i.e. an increase in latency). Therefore, in situation where a direct connection between the baby unit 102 and the parent unit 104 does not deteriorate to a point where the latency, or packet loss, is worse than using the Wi-Fi router 106, then the system could keep using the direct connection.

For example, the parent unit 104 could stay connected to the baby unit 102 via the direct connection when the received signal strength indicator (RSSI) is larger than the switching threshold (i.e. the signal strength is above a minimum quality). The parent unit 104 could also take into consideration the packet loss rate in the video stream to offset the RSSI when the signal strength is high but with a large packet loss rate.

In some cases, the packet loss rate or the latency may be negligible and the RSSI may become the only relevant parameter to the switching logic. Thus, the switching logic could also be based solely on the RSSI, or signal intensity, to reduce the processing resources required in the switching logic.

The use of the term "emulating" refers to connecting the first device to the second device via a second wireless connection which is not necessarily used for relevant data transfers. In other words, when the first device is emulating a connection via a second network, the first device is technically connected to the second device via both the first and the second wireless connections, but only requires receiving relevant data (e.g. video in a baby monitoring system) through the first wireless connection.

The second wireless connection is used to transfer data from the second device to the first device. However, the only requirement of the data transferred through the "emulated" connection is that is should enable the first device to determine the signal quality of the second, emulated, wireless connection.

Thus, the first wireless connection is used for sending and receiving operational data (i.e. user data which corresponds to the main functional purpose of the system i.e. the video data) and the second wireless connection is used for sending and receiving quality test data only (or primarily) for the purpose of determining signal parameters indicative of the quality of data transfer.

In one example, the second device transmits a video through both the first wireless connection and the second wireless connection via time sharing. The first device receives the video through the first wireless connection. When the first device is considering switching to the second wireless connection based on the switching logic, it emulates the second wireless connection by time sharing the received data packets from both the first wireless connection and the second wireless connection. The data packets coming through the second wireless connection also contain the video but may not need to be fully decoded or further processed as this may not be necessary for determining signal quality (e.g. signal strength or latency). Thus, only the required test data is both transmitted and received., The first device must have enough processing resources to receive data packets from both wireless connections via time sharing.

In a second example, the second device may transmit the video through the first wireless connection and transmit different, unrelated, data with a smaller data packet size than the video through the second wireless connection. This would enable the second device to determine the signal quality of the second wireless connection without the need to receive the same data packet size as for the first wireless connection.

The skilled person would be readily capable of developing a processor for carrying out any herein described method. Thus, each step of a flow chart may represent a different action performed by a processor, and may be performed by a respective module of the processor.

The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A system for switching between wireless connections, comprising:
a first unit configured to communicate with a second unit through a first wireless connection and capable of communicating with the second unit through a second wireless connection, the first unit comprising a processing system configured to:
determine (302) a first signal parameter indicative of the quality of data transfer between the first unit and the second unit over the first wireless connection;
emulate (304) a connection between the first unit and the second unit through the second wireless connection;
determine (306) a second signal parameter indicative of the quality of data transfer between the first unit and the second unit over the second wireless connection; and
if the second signal parameter indicates a higher quality of data transfer than the first signal parameter, switch (310) the wireless connection the first unit uses to communicate with the second unit from the first wireless connection to the second wireless connection.

2. The system of claim 1, wherein the processing system is further configured to switch the wireless communication to the second wireless connection if:
the first signal parameter indicates a quality of data transfer lower than a first threshold; and
the second signal parameter indicates a quality of data transfer higher than a second threshold,
wherein the first threshold and the second threshold are indicative of a minimum quality of data transfer.

3. The system of claim 2, wherein the processing system is further configured to:
search for an availability of the second wireless connection, and confirm said availability, only if the first signal parameter is below a third threshold,
wherein the third threshold is indicative of higher quality of data transfer than the first threshold and,
wherein the processing system is configured to emulate the connection between the first unit and the second unit through the second wireless connection after the availability of the second wireless connection is confirmed.

4. The system of any one of claims 1 to 3, wherein one of the first wireless connection or the second wireless connection is a direct Wi-Fi connection and the other wireless connection is a Wi-Fi connection via a Wi-Fi access point.

5. The system of claim 4, wherein the first unit comprises a transceiver configured to:
transmit data through the first wireless connection using a first modulation scheme, when using the first wireless connection; and
transmit data through the second wireless connection using a second, different, modulation scheme, when using the second wireless connection.

6. The system of any one of claims 1 to 5, wherein the processing system is configured to emulate the connection between the first unit and the second unit through the second wireless connection by interleaving in time data transfers through the first wireless connection and data transfers through the second wireless connections.

7. The system of any one of claims 1 to 6, wherein the first signal parameter and the second signal parameter are based on one or more of:
signal strength of the corresponding wireless network;
packet loss rate of the corresponding wireless network;
latency of the corresponding wireless network; and
jitter of the corresponding wireless network.

8. The system of any one of claims 1 to 7, further comprising the second unit, wherein the second unit is configured to transmit data through both the first wireless connection and the second wireless connection concurrently.

9. The system of claim 8, wherein:
the second unit is a monitoring unit for obtaining monitoring data of a second subject and transmitting the monitoring data from the second subject to the first unit, and
the first unit is a receiver unit for receiving the monitoring data related to the second subject and outputting the monitoring data to a first subject such that the first subject can monitor the second subject.

10. A method for switching between wireless connections when a first unit is configured to communicate with a second unit through a first wireless connection and capable of communicating with the second unit through a second wireless connection, the method comprising:
determining (302) a first signal parameter indicative of the quality of data transfer between the first unit and the second unit over the first wireless connection;
emulating (304) a connection between the first unit and the second unit through the second wireless connection;
determining (306) a second signal parameter indicative of the quality of data transfer between the first unit and the second unit over the second wireless connection; and
if the second signal parameter indicates a higher quality of data transfer than the first signal parameter, switching (310) the wireless connection the first unit uses to communicate with the second unit from the first wireless connection to the second wireless connection.

11. The method of claim 10, wherein switching the wireless communication to the second wireless connection is based on:
the first signal parameter being indicative of a quality of data transfer lower than a first threshold; and
the second signal parameter being indicative of a quality of data transfer higher than a second threshold,
wherein the first threshold and the second threshold are indicative of a minimum quality of data transfer.

12. The method of claim 11, further comprising:
searching for an availability of the second wireless connection, and confirm said availability, only if the first signal parameter is below a third threshold,
wherein the third threshold is indicative of higher quality of data transfer than the first threshold and,
wherein emulating the connection between the first unit and the second unit through the second wireless connection is performed after the availability of the second wireless connection is confirmed.

13. The method of any one of claims 10 to 12, wherein one of the first wireless connection or the second wireless connection is a direct Wi-Fi connection and the other wireless connection is a Wi-Fi connection via a Wi-Fi access point.

14. The method of any one of claims 10 to 13, wherein emulating the connection between the first unit and the second unit through the second wireless connection is achieved by interleaving in time data transfers through the first wireless connection and data transfers through the second wireless connections.

15. A computer program product comprising computer program code which, when executed on a computing device having a processing system, cause the processing system to perform all of the steps of the method according to any of claims 10 to 14.
